(19) Europäisches Patentamt / European Patent Office / Office européen des brevets

(11) **EP 2 833 113 B1**

(12) **EUROPEAN PATENT SPECIFICATION**

(45) Date of publication and mention
of the grant of the patent:
**03.05.2017 Bulletin 2017/18**

(51) Int Cl.:
**G01M 3/24** *(2006.01)*     **F17D 5/06** *(2006.01)*

(21) Application number: **12873033.0**

(86) International application number:
**PCT/JP2012/084046**

(22) Date of filing: **28.12.2012**

(87) International publication number:
**WO 2013/145492 (03.10.2013 Gazette 2013/40)**

(54) **LEAK DETECTION METHOD, WATER LEAKAGE DETECTION METHOD, LEAK DETECTION DEVICE, AND WATER LEAKAGE DETECTION DEVICE**

LECKAGENERKENNUNGSVERFAHREN, VERFAHREN ZUR ERKENNUNG VON WASSERLECKAGEN, LECKAGENERKENNUNGSVORRICHTUNG SOWIE VORRICHTUNG ZUR ERKENNUNG VON WASSERLECKAGEN

PROCÉDÉ DE DÉTECTION DE FUITE, PROCÉDÉ DE DÉTECTION DE FUITE D'EAU, DISPOSITIF DE DÉTECTION DE FUITE ET DISPOSITIF DE DÉTECTION DE FUITE D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 JP 2012082165**

(43) Date of publication of application:
**04.02.2015 Bulletin 2015/06**

(73) Proprietor: **NEC Corporation**
**Tokyo 108-8001 (JP)**

(72) Inventor: **TANAKA, Toshiaki**
**Minato-ku**
**Tokyo, 108-8001 (JP)**

(74) Representative: **Vossius & Partner**
**Patentanwälte Rechtsanwälte mbB**
**Siebertstrasse 3**
**81675 München (DE)**

(56) References cited:
**EP-A1- 2 352 002      EP-A2- 0 697 586**
**WO-A1-2004/090498    JP-A- H0 238 937**
**JP-A- H03 279 833     JP-A- H06 123 626**
**JP-A- H07 248 274     JP-A- H10 176 970**
**US-B1- 7 739 899**

**Description**

Technical Field

The present invention relates to a leakage detection method, a water-leakage detection method, a leakage detection device, and a water-leakage detection device, for a pipe.

Background Art

The prevention of leakage from a pipe in which a fluid flows, for example, the prevention of water-leakage in the municipal water-supply system is of major concern. It is said that there are areas in which several tens of percent of the amount of supplied water are absorbed in the ground as leaked water although it depends on the maintenance state of the water-supply system. Such large amount of the leaked water wastes water itself as precious resources, and it is required to hold a capacity which is more than an actually required amount in the water-supply system such as a water-supply plant, and thus they are really insufficient. Moreover, the following actual examples have been often reported. When a large amount of water leaked by damage to a water-supply pipe flows into a specific location, the surrounding soil flows out, and extensive damage such as the collapse of road occurs.

Therefore, it is required to detect and repair a water-leakage immediately after the occurrence thereof. However, it is actually not easy to detect a water-leakage. There are some reasons for this, major factors are as follows. Water is colorless and odorless. In addition, since there is ground water under the ground, it is difficult to distinguish between leaked water and ground water. Moreover, there is also a major factor that since most of water-supply pipes are buried under the ground, it is difficult to perform detection itself.

However, some water-leakage detection methods have been developed and are actually used. As an example, there is a method for detecting a water-leakage spot by senses of hearing of skilled investigators. This is, for example, the following method. An investigator checks the presence or absence of a water-leakage sound using the sense of hearing at a position at which a valve is exposed to the surface of the ground in the quiet of the midnight. When a water-leakage sound is detected, the investigator moves along a pipeline while applying a specialized sound locator to the surface of the ground, and the position at which a water-leakage sound is the most clear is detected. Thus, the position of the water-leakage is identified. This method requires no expensive devices and however has problems in that investigators are required to have skills, and there are big differences in skill among skilled investigators.

Thus, in order to identify a water-leakage position without relying on people's senses, a method for identifying a water-leakage location using a sound detector or a vibration detector, attached to a pipe, has been studied, for example (e.g., see patent documents 1 to 4). This method is a method in which two acoustic sensors are placed on a pipe so that an approximate spot of a suspected water-leakage is intervened between the two acoustic sensors, signals of water-leakage sounds received by the acoustic sensors are subjected to cross-correlation processing, and a water-leakage position is identified from a difference between arrival times of the water-leakage sounds. Although this method is capable of accurately identifying a water-leakage spot without abilities of investigators, it is required that an approximate water-leakage spot is identified in advance. Therefore, an operation step of checking the presence or absence of a water-leakage sound by an investigator at a spot at which a valve is exposed to the surface of the ground, such as the above-described method, is required.

After all, in any of the above-described methods, it is required to search for water-leakage spots by investigators in a labor-intensive manner. However, it is not easy to maintain and secure skilled investigators, and the operation time is limited to the quiet midnight. Thus, efficiency in search operation is poor. Moreover, water-supply networks each with a total extension of several tens of kilometers are placed in big cities. Thus, there are many cities in which effective measures against water-leakage are not taken.

Prior Art Documents

Patent Documents

Patent Document 1: JP 2008-51776 A

Patent Document 2: JP H11-72409 A

Patent Document 3: JP H11-248591 A

Patent Document 4: JP H11-117356 A

US 7, 739, 899 B1 relates to method for detection and location of air leaks in a pressure vessel, such as a spacecraft.

EP 0 697 586 A2 relates to a system for mapping absolute acoustic noise intensity in a three-dimensional acoustic noise field and using three-dimensional absolute noise intensities to infer operational or performance characteristics of components or structures within the monitored field.

WO 2004/090498 A1 relates to a device for detecting and approximately localizing a leakage in a drinking water supply network.

EP 2 352 002 A1 relates to a system for remote leak detection and/or path tracking for underground fluid transportation pipelines.

Summary of Invention

Problem to be Solved by the Invention

In the case where a position is localized by cross-correlation processing using acoustic sensors that are in contact with a pipe such as in a technique described in the above-described patent documents, it is required that a water-leakage spot is present between the two sensors in measurement principle. That is, for example, in the case where two sensors A and B are provided on a pipe, as to a water-leakage spot which is out of the place between the sensors A and B, only alternative information as to whether the water-leakage spot is out of the sensor A or the sensor B can be obtained, and information as to the distance cannot be obtained. Therefore, in the case where a water-leakage spot is right out of a sensor network, the position thereof cannot be localized, and there is the following challenge. Even if plural sensors are arranged, it is difficult to average position data determined using the sensors and further improve accuracy of localization of the position.

In the case where acoustic sensors are arranged along a pipeline as in a technique described in the above-described patent documents, it is desired to arrange the acoustic sensors at intervals of about 100 m to hundreds of meters, for example, from the relationship of water-leakage sound propagating distance. Since a water-supply pipe or the like is generally buried under the ground, it is realistic that acoustic sensors are placed on a pipeline utilizing existing facilities such as a manhole and the like, from the viewpoint of the labor of construction. However, a manhole and the like are not always present at locations which are convenient to arrange the acoustic sensors. Therefore, arranging sensors at ideal positions is not easy because an extensive construction is required and the like.

The present invention is intended to provide a leakage detection method, a water-leakage detection method, a leakage detection device, and a water-leakage detection device, for a pipe, with ease of placing sensors, high detection accuracy, and high reliability. Means for Solving Problem

In order to achieve the aforementioned object, the leakage detection method of the present invention is a leakage detection method for detecting a leakage from a pipe in which a fluid flows, using a pair of acoustic sensors arranged at a certain distance from each other and a certain distance from a location of the pipe, the method including: an acoustic data acquisition step of performing time synchronization between acoustic sensors configuring the pair of acoustic sensors to acquire acoustic data by the acoustic sensors; a time difference calculation step of determining a difference between arrival times of sounds received by the respective acoustic sensors; a distance difference calculation step of calculating, from the difference between arrival times, a difference between distances from a source of the sounds to the respective acoustic sensors; a hyperbola acquisition step of determining a hyperbola which is a collection of points at each of which a difference in distance from each of the acoustic sensors is constant, with positions of the respective acoustic sensors as foci; and a position identification step of identifying a position of the leakage from an intersection between the pipe and the hyperbola.

The water-leakage detection method of the present invention is a water-leakage detection method for detecting a water-leakage, the water-leakage detection method including detecting a water-leakage from a conduit using the leakage detection method of the present invention.

The leakage detection device of the present invention is a leakage detection device for detecting a leakage from a pipe in which a fluid flows, the leakage detection device including: an acoustic data acquisition unit that is a pair of acoustic sensors capable of acquiring acoustic data and being subjected to time synchronization, arranged at a certain distance from each other and a certain distance from a location of the pipe; a time difference calculation unit that determines a difference between arrival times of sounds received by the respective acoustic sensors; a distance difference calculation unit that calculates, from the difference between arrival times, a difference between distances from a source of the sounds to the respective acoustic sensors; a hyperbola acquisition unit that determines a hyperbola which is a collection of points at each of which a difference in distance from each of the acoustic sensors is constant, with positions of the respective acoustic sensors as foci; and a position identification unit that identifies a position of the leakage from an intersection between the pipe and the hyperbola.

The water-leakage detection device of the present invention is a water-leakage detection device for detecting a water-leakage from a conduit, the water-leakage detection device including: the leakage detection device of the present invention.

Effects of the Invention

According to the present invention, a leakage detection method, a water-leakage detection method, a leakage detection device, and a water-leakage detection device, for a pipe, with ease of placing sensors, high detection accuracy, and high reliability is provided according to claims 1 and 7.

Brief Description of Drawings

[FIG 1] FIG. 1 is a conceptual diagram describing a method in which position localization is performed using two sensors as a pair in the present invention.
[FIG. 2] FIG. 2 is a conceptual diagram describing a method in which position localization is performed using plural pairs of sensors in the present invention.
[FIG. 3] FIG. 3 is a conceptual diagram of determination of water-leakage sound using plural pairs of sensors in the present invention.
[FIG. 4] FIG. 4 is a conceptual diagram describing an influence of an error of sound velocity on position localization.
[FIG. 5] FIG. 5 is a conceptual diagram describing a method in which position localization is performed using three sensors as a set.
[FIG. 6] FIG. 6 is a conceptual diagram of an example of a water-leakage detection system using the water-leakage detection method and the water-leakage detection device, of the present invention.
[FIG. 7] FIG. 7 is a block diagram of an example of a water-leakage detection system using the water-leakage detection method and the water-leakage detection device, of the present invention.
[FIG. 8] FIG. 8 is a flow chart describing an operation of a master-side sensor.
[FIG. 9] FIG. 9 is a flow chart describing an operation of a slave-side sensor.
[FIG. 10] FIG. 10 is a flow chart describing an operation of a processing center.
[FIG. 11] FIG. 11 is a flow chart describing an operation of water-leakage detection processing.
[FIG. 12] FIG. 12 is a flow chart describing an operation of position localization processing.
[FIG. 13] FIG. 13 is a flow chart describing an operation of a master-side sensor in the fifth embodiment of the present invention.
[FIG. 14] FIG. 14 is a flow chart describing an operation of position localization processing in the fifth embodiment of the present invention.

Description of Embodiments

In the leakage detection method of the present invention, it is preferred that a plurality of the pairs of acoustic sensors are used, in the hyperbola acquisition step, hyperbolas for the respective pairs are determined, and in the position identification step, intersections of the hyperbolas determined for the respective pairs are subjected to weighted averaging to identify a position of the source of the sounds.

In the leakage detection method of the present invention, it is preferred that a plurality of the pairs of acoustic sensors are used, in the hyperbola acquisition step, hyperbolas for the respective pairs are determined, and in the position identification step, a position of an intersection on the pipe among intersections of the hyperbolas determined for the respective pairs is determined as a position of the leakage.

In the leakage detection method of the present invention, it is preferred that relative time synchronization is performed between the acoustic sensors configuring each of the pairs of acoustic sensors, and absolute time synchronization is performed among the plurality of the pairs of acoustic sensors.

In the leakage detection method of the present invention, it is preferred that at least three acoustic sensors are used as a set as substitute for the two acoustic sensors, and in the hyperbola acquisition step, at least three kinds of hyperbolas are determined using, as foci, combinations of two acoustic sensors among the at least three acoustic sensors.

In the leakage detection method of the present invention, it is preferred that at least three pairs of acoustic sensors are used, and in the position identification step, the intersections are determined using, as a variable parameter, a sound velocity in a medium in which the sound propagates.

It is preferred that the leakage detection method of the present invention includes, prior to the time difference calculation step, a determination step of deriving a power spectrum of acoustic data received by the acoustic sensor and comparing the power spectrum with a power spectrum of past acoustic data with no detection of leakage, to determine the presence or absence of a leakage.

In the leakage detection method of the present invention, it is preferred that when plural intersections of the hyperbolas are present, in the position identification step, a position of the leakage is identified using intensity ratio data of leakage sounds on the power spectrum of the acoustic data received by the acoustic sensors.

In the leakage detection method of the present invention, it is preferred that in the acoustic data acquisition step, the acoustic data received by the acoustic sensors are collected for each of combinations of plural sampling rates and plural recording times.

It is preferred that the leakage detection method of the present invention includes a determination step of determining the presence or absence of a leakage using another acoustic analysis method prior to the time difference calculation step.

In the leakage detection device of the present invention, it is preferred that a plurality of the pairs of acoustic sensors are used, the hyperbola acquisition unit determines hyperbolas for the respective pairs, and the position identification unit subjects intersections of the hyperbolas determined for the respective pairs to weighted averaging to identify a position of the source of the sounds.

In the leakage detection device of the present invention, it is preferred that a plurality of the pairs of acoustic sensors are used, the hyperbola acquisition unit determines hyperbolas for the respective pairs, and the position identification unit determines a position of an intersection on the pipe among intersections of hyperbolas determined for the respective pairs as a position of the leakage.

In the leakage detection device of the present invention, it is preferred that relative time synchronization is performed between the acoustic sensors configuring each of the pairs of acoustic sensors, and absolute time synchronization is performed among the plurality of the pairs of acoustic sensors.

In the leakage detection device of the present invention, it is preferred that at least three acoustic sensors are used as a set as substitute for the two acoustic sensors, and the hyperbola acquisition unit determines at least three kinds of hyperbolas using, as foci, combinations of two acoustic sensors among the at least three acoustic sensors.

In the leakage detection device of the present invention, it is preferred that at least three pairs of acoustic sensors are used, and the position identification unit determines the intersections using, as a variable parameter, a sound velocity in a medium in which the sound propagates.

It is preferred that the leakage detection device of the present invention further includes a determination unit that derives and compares a power spectrum of acoustic data received by the acoustic sensors with a power spectrum of past acoustic data with no detection of leakage to determine the presence or absence of a leakage.

In the leakage detection device of the present invention, it is preferred that when plural intersections of the hyperbolas are present, the position identification unit identifies a position of the leakage using intensity ratio data of leakage sounds on the power spectrum of the acoustic data received by the acoustic sensors.

In the leakage detection device of the present invention, it is preferred that the acoustic data acquisition unit collects the acoustic data received by the acoustic sensors for each of combinations of plural sampling rates and plural recording times.

It is preferred that the leakage detection device of the present invention further includes a determination unit that determines the presence or absence of a leakage using another acoustic analysis unit.

The detection of a water-leakage spot can be efficiently performed by fixedly arranging acoustic sensors along a pipeline in a net-like fashion, accumulating data regularly collected by these sensors in a server of a processing center to perform automatic detection processing of a water-leakage sound, performing cross-correlation processing between neighborhood sensor data when a water-leakage sound is detected, and placing a system of localization of a water-leakage position. By constructing and operating such system, the detection of a water-leakage spot and the localization of a position of the water-leakage spot can be intensively and automatically performed in the processing center. Thus, it is expected that problems of the maintenance and securement of skilled investigators and the inefficient operation of patrolling in the midnight can be solved. However, there are the following challenges in the construction of such system. Thus, such system has not been achieved.

First, the challenge can be found in automatic identification of a water-leakage sound. In order to automatically detect the presence or absence of a water-leakage, a method in which signals of acoustic sensors are subjected to frequency analysis processing or the like, and the presence or absence of a water-leakage is determined by energy intensity in a water-leakage sound-specific frequency band is considered. However, even if data are acquired in the quiet of the midnight, there is no guarantee that there are no components of other sound sources other than the water-leakage in the band, and there is a challenge of possibility of raising a false alarm.

Further, the challenge can be found in time synchronization among different sensors. The velocity of acoustic wave that propagates through a solid such as a pipe line is about 3,000 to 6,000 m/s although it depends on a material thereof. The time required for an acoustic wave to propagate 1 m is the inverse of this velocity and is thus about 167 to

333 μs. That is, in order to localize a water-leakage spot by cross-correlation processing with accuracy of about 1 m, it is required to perform the measurement with accuracy of a different between arrival times of water-leakage sounds of around 200 μs. Generally, it is required to perform the measurement at time step that is one digit higher than desired accuracy, and thus, it is desired that the collection of water-leakage sounds by acoustic sensors is performed at intervals of about 20 μs, i.e., at a sampling rate of about 50 kHz.

In the case where a difference between arrival times of water-leakage sounds is determined by cross-correlation processing, it is of course required to match the timing of sampling in the collection of data between two sensors. That is, it is required that the two sensors are subjected to time synchronization with really high accuracy of about 20 μs. Generally, when time synchronization is performed with such high accuracy, a method utilizing an external synchronizing signal such as a GPS, an electric wave watch, or the like is generally used. However, sensors are generally placed under a manhole, and therefore, it is not easy to receive an electric wave of a GPS or an electric wave watch, and there is a challenge of being difficult to perform accurate time synchronization. It is of course possible that time synchronization is performed easily by connecting among sensors that are apart from each other with a wire. However, in this case, huge costs of construction of placing a long connection wire are required, and it is thus not a realistic alternative.

It is assumed that the accuracy can be improved by subjecting sensors which are not adjacent to each other to correlation processing without fixing a pair of sensors for performing cross-correlation processing. However, in order to perform this, all of neighboring sensors are required to be subjected to accurate time synchronization, and it is thus also not a realistic alternative from the viewpoint of the problem of time synchronization.

Moreover, there is a challenge in a method of recovering data collected by acoustic sensors. As mentioned above, it is considered that connecting sensors with a wire network is not realistic from the viewpoint of costs of construction of placing the wire network, and thus, using a wireless network is appropriate. In order to efficiently collect data in a processing center using limited resources of a wireless network, the size of the acoustic data collected from each sensor is desirably small to the extent possible. However, in order to perform correlation processing with desired accuracy, it is required to perform high-speed sampling at about 50 kHz as described above. Further, an operation of not only constantly subjecting the collected acoustic data to automatic processing in a server, but also regenerating the data in a processing center at times so that investigators can listen to a sound of the data to check whether or not the sound is derived from a water-leakage is assumed. Therefore, the size of the acoustic data desirably has a length satisfying the time required to listen significantly and is, for example, for 1 minute. Thus, the data length in the high-speed sampling is long, i.e., the size of the data is really big, and there is a challenge of putting a pressure on the wireless network.

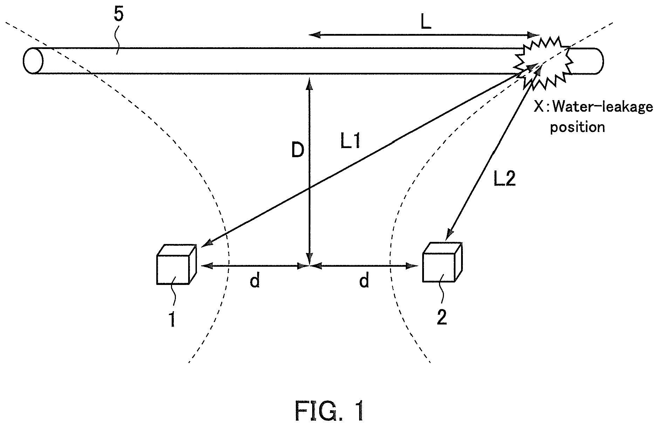

The leakage detection method, the water-leakage detection method, the leakage detection device, and the water-leakage detection device, of the present invention, are described in detail below with reference to examples. The present invention, however, is not limited by the following embodiments. In FIGs. 1 to 14, the identical parts are denoted by the identical reference numerals.

[First embodiment]

FIG. 1 is a conceptual diagram describing a leakage detection method of the first embodiment according to the present invention. As shown in FIG. 1, in the present invention, two acoustic sensors 1 and 2 are arranged at a certain distance from each other and at a certain distance from a location of a pipe 5. A fluid flows in the pipe 5. A leakage from the pipe 5 is detected as mentioned below using the two acoustic sensors as a pair. In the present embodiment, the case where the pipe 5 is a conduit laid under the ground, and the fluid is water is described. The present invention, however, is not limited thereby.

In the leakage detection method of the present embodiment, the following steps are performed. First, the acoustic sensors 1 and 2 configuring the pair of acoustic sensors are subjected to time synchronization, and acoustic data are acquired (acoustic data acquisition step). Subsequently, a difference between arrival time of sound acquired by the acoustic sensor 1 and arrival time of sound acquired by the acoustic sensor 2 is determined (time difference calculation step). From the obtained difference between arrival times, a difference between a distance from the source of the sounds to the acoustic sensor 1 and a distance from the source of the sounds to the acoustic sensor 2 is calculated (distance difference calculation step). Then, a hyperbola which is a collection of points at each of which a difference in distance from each of the acoustic sensors 1 and 2 is constant, with positions of the respective acoustic sensors 1 and 2 as foci, is determined (hyperbola acquisition step). Subsequently, a position of the leakage is determined from an intersection between the pipe 5 and the hyperbola (position identification step).

In the present invention, acoustic sensors are arranged at a certain distance from a location of the pipe. Thus, the acoustic sensors can be placed on the side walk of the surface of the ground without being directly in contact with a conduit that is under the ground, for example. A water-leakage sound propagates through a conduit and of course propagates under the ground. Thus, the water-leakage sound can be listened on the surface of the ground. This is understood from the fact that a water-leakage sound is listened while applying a specialized sound locator to the surface of the ground when an investigator searches for a water-leakage spot in the related art. Therefore, sensors can be placed at ideal locations without a limitation to a manhole position and the like. Thus, it becomes possible to save construction costs. Moreover, by placing sensors not under the ground but on the ground, it becomes easier to place a wireless antenna for collecting data, radiation characteristics of an electric wave are improved, and a communicable area in data collection described below is expanded.

Moreover, in the case of using acoustic sensors in contact with a pipe, as mentioned above, a leakage position between the sensors can be only localized. In contrast, by using a pair of acoustic sensors placed apart from the location of a pipe as in the present invention, the leakage sound is subjected to cross-correlation processing, and a leakage position can be localized in a wide range. Specifically, FIG. 1 has a relationship of the following formula, and a region with a value obtained by multiplying the difference between arrival times of water-leakage sounds by a sound velocity, i.e., a constant value of a difference between a route from one of the pair of acoustic sensors to the water-leakage spot and a route from the other to the water-leakage spot is present on a hyperbola with two sensors as foci. Therefore, a water-leakage position can be identified by determining an intersection of the hyperbola and the pipeline.

$$L1-L2=\sqrt{D^2+(L+d)^2}-\sqrt{D^2+(L-d)^2} = \tau \cdot V_g$$

2d:     Distance between acoustic sensors 1 and 2
L1:     Propagation distance from water-leakage position X to acoustic sensor 1
L2:     Propagating distance from water-leakage position X to acoustic sensor 2
D:      Distance from midpoint between acoustic sensors 1 and 2 to conduit
L:      Distance between position on conduit immediately below midpoint between acoustic sensors 1 and 2 and water-leakage position X
$\tau$:     Difference between arrival times of water-leakage sounds
Vg:     Sound velocity under the ground

As described above, not only in the case where a water-leakage spot is present between acoustic sensors as a pair, but also in the case where a water-leakage spot is present out of the acoustic sensors, the water-leakage position can be localized. Thus, it becomes possible to improve accuracy of localizing a water-leakage position by weighted average processing of multiple solutions utilizing acoustic sensors placed planarly. Moreover, even in the case where a water-leakage spot is present right out of a sensor network, the position can be localized.

[Second embodiment]

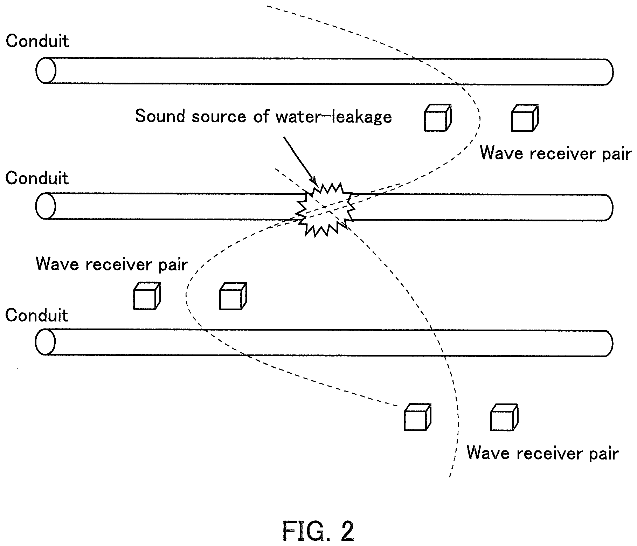

FIG. 2 is a conceptual diagram describing a leakage detection method of the second embodiment according to the present invention. In the present embodiment, plural pairs of acoustic sensors are used. FIG. 2 shows the case of using three pairs of acoustic sensors (in FIG. 2, each pair of acoustic sensors is referred to as a "wave receiver pair"). Hyperbolas for the respective pairs can be obtained as in the first embodiment. Thus, a water- leakage position can be identified by determining intersections of the obtained plural hyperbolas and the pipeline. When water-leakage sounds can be received by plural pairs of acoustic sensors, and cross-correlation processing can be performed among the water-leakage sounds, it becomes possible to improve accuracy of localization of a water-leakage position by performing appropriate weighted-average processing and the like in the course of determining multiple solutions of the intersections of the plural hyperbolas determined with the pairs and the pipeline.

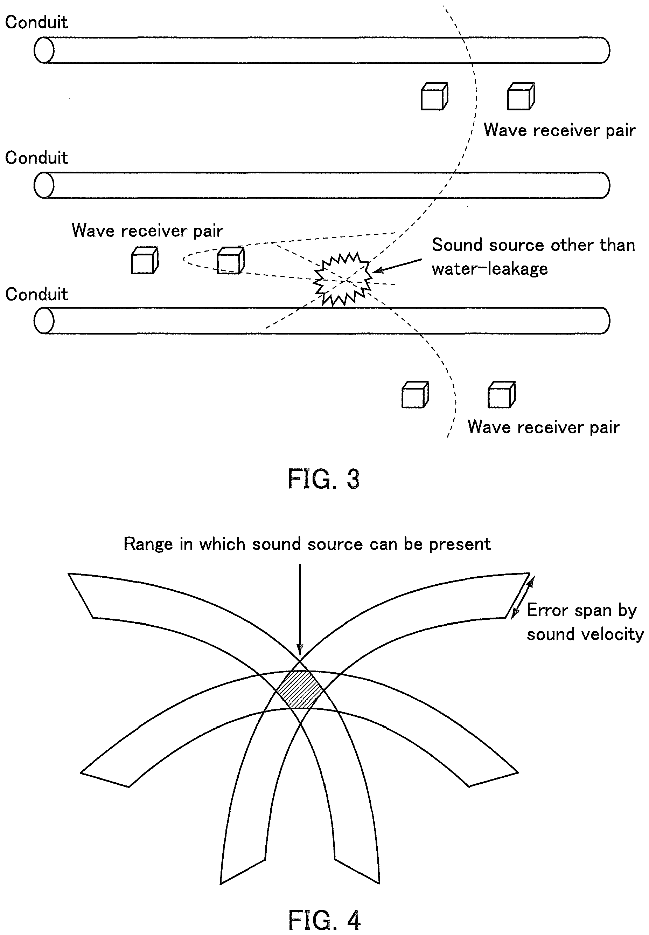

By using plural pairs of acoustic sensors, it becomes possible to further determine whether the sounds received by the acoustic sensors are water-leakage sounds or sounds from sound sources other than the water-leakage sounds. This is because, for example, as shown in FIG. 3, when intersections of hyperbolas are not present on the pipelines in the course of determining intersections of the plural hyperbolas and the pipelines, it can be reasonably determined that the sources of the sounds are not derived from a water-leakage, and the sounds can be excluded from objects to be processed. That is, when the intersections of the plural hyperbolas determined with the pairs of acoustic sensors are at the positions which do not intersect with pipelines, it can be determined that sounds received by the acoustic sensors are derived from sources of sounds other than water-leakage sounds. As described above, by analyzing sounds in combination with information on positions of pipelines using plural pairs of acoustic sensors, an error alarm caused by components of sound sources other than water-leakage sounds can be prevented without analysis of kinds of sounds and the like.

In the case where there is a range (error) in estimate of a sound velocity in an area of detection spot under the ground, a range in which a sound source can be present is a band-like region in which a hyperbola has a width. When water-leakage sounds are received by plural pairs of acoustic sensors, a source of the sounds is present in a part in which band-like regions intersect with each other as shown in FIG. 4. Thus, when water-leakage sounds are received by three or more pairs of acoustic sensors, in the position identification step, the intersection can be searched for by obtaining a solution using a sound velocity in a medium in which the sound propagates as a variable parameter. As described above, in the present embodiment, even in the case where there is a range in estimate of a sound velocity in an area of detection spot under the ground, a sound source (water-leakage position) can be identified.

[Third embodiment]

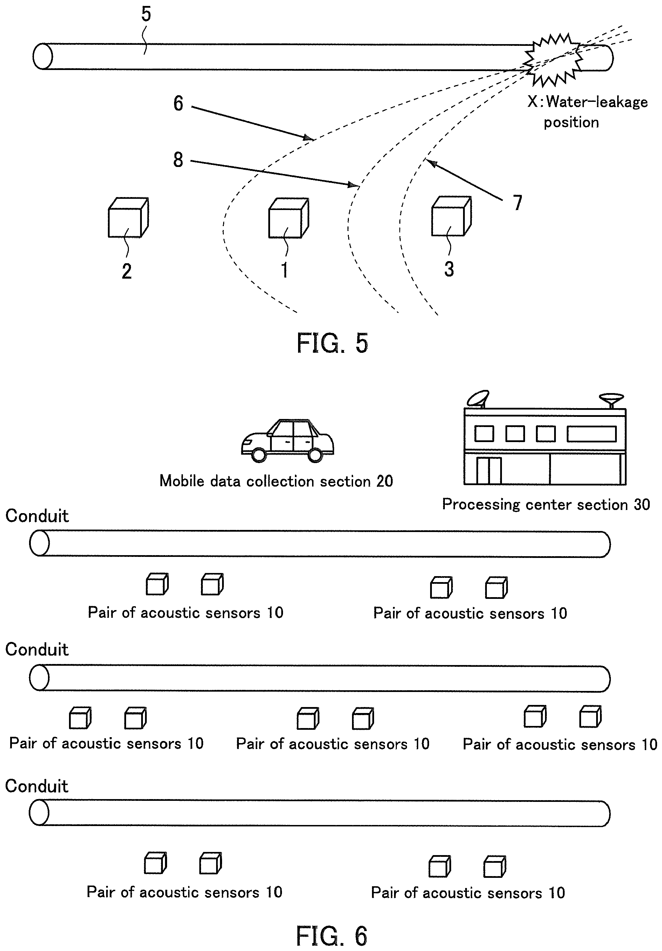

FIG. 5 is a conceptual diagram describing a leakage detection method of the third embodiment according to the present invention. As shown in FIG. 5, in the present invention, three acoustic sensors 1, 2, and 3 are used as a set and are arranged at a certain distance from one another and a certain distance from a location of a pipe 5. In this case, in the cross-correlation processing for determining a difference between arrival times of water-leakage sounds, three combinations including a combination of acoustic sensors 1 and 2, a combination of acoustic sensors 1 and 3, and a combination of acoustic sensors 2 and 3 can be selected. Thus, as shown in FIG. 5, three hyperbolas including a hyperbola 6 having the acoustic sensors 1 and 2 as foci, a hyperbola 7 having the acoustic sensors 1 and 3 as foci, and a hyperbola 8 having the acoustic sensors 2 and 3 as foci can be drawn. By determining a spot at which three intersections formed by the three hyperbolas converge, it becomes possible to localize the position of a water-leakage spot and prevent an error alarm without using plural pairs of acoustic sensors. Although three acoustic sensors are used as a set in the present embodiment, three or more acoustic sensors may be used as a set.

[Fourth embodiment]

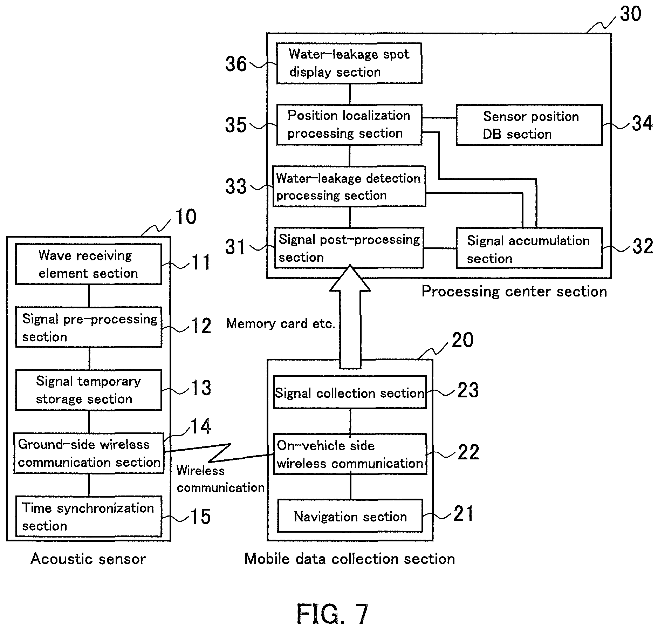

The fourth embodiment is an example of a water-leakage detection system using a water-leakage detection method and a water-leakage detection device of the present invention. FIG. 6 is a conceptual diagram of the water-leakage detection system of the present embodiment. FIG. 7 shows a configuration example of the system. As shown in FIG. 6, the system is composed of acoustic sensors 10 that is placed on the road and collects water-leakage sounds, a mobile data collection section 20 that is mounted on a vehicle or the like and collects acoustic data by patrolling around the acoustic sensors 10 at the respective places, and a processing center section 30 that performs detection of water-leakage sounds and position localization processing. The acoustic sensors 10 are arranged in a net-like fashion along a conduit line by a pair to be subjected to correlation processing used in position localization, for example, at intervals of about several hundreds of meters, so that a water-leakage spot can be planarly detected in a wide range.

Subsequently, components of each section are described step by step using FIG. 7. Each acoustic sensor 10 is composed of a wave receiving element section 11 that converts a water-leakage sound that propagates as an oscillatory wave in a pipeline or under the ground into an electrical signal, a signal pre-processing section 12 that digitalizes the electrical signal from the wave receiving element section 11 and compresses and the like data, a signal temporary storage section 13 that temporarily stores acoustic data processed by the signal pre-processing section 12, a ground-side wireless communication section 14 that sends the acoustic data stored in the signal temporary storage section 13 to a mobile data collection section 20, and a time synchronization section 15 that performs internal time synchronization utilizing communication with other acoustic sensors 10 and communication with the mobile data collection section 20.

As described above, acoustic sensors 10 are composed by a pair to be subjected to correlation processing. However, it is required to perform time synchronization by a pair before measurement. Thus, even though the acoustic sensors 10 have the same functional configuration, there are two functions of master and slave.

The mobile data collection section 20 is composed of a navigation section 21 that guides a direction to each acoustic sensor 10 using a GPS and the like, an on-vehicle side wireless communication section 22 that receives the acoustic data sent from the acoustic sensors 10, and a signal collection section 23 that temporarily stores the received acoustic data.

The processing center section 30 is composed of a signal post-processing section 31 that subjects the acoustic data transferred from the mobile data collection section 20 via a memory card or the like to processing such as decompressing and filtering, a signal accumulation section 32 that accumulates the processed acoustic data, a water-leakage detection processing section 33 that performs detection processing of a water-leakage sound using the acoustic data processed by the signal post-processing section 31, a sensor position database (DB) section 34 that stores information on position of each acoustic sensor 10 and information on arrangement of conduit, a position localization processing section 35 that determines a position of a water-leakage using the acoustic data of a water-leakage sound detected by the water-leakage detection processing section 33 in combination with the information on position stored in the sensor position DB section 34, and a water-leakage spot display section 36 that displays a spot of the detected water-leakage to an investigator.

The transfer of the acoustic data between the acoustic sensor 10 and the mobile data collection section 20 is performed not only by wireless communication, but also by a method involving insertion and removal of a memory card or wire communication by connector connection. Similarly, the transfer of the acoustic data between the mobile data collection section 20 and the processing center section 30 may be performed not only by a method involving insertion and removal of a memory card, but also by wireless communication or wire communication by connector connection.

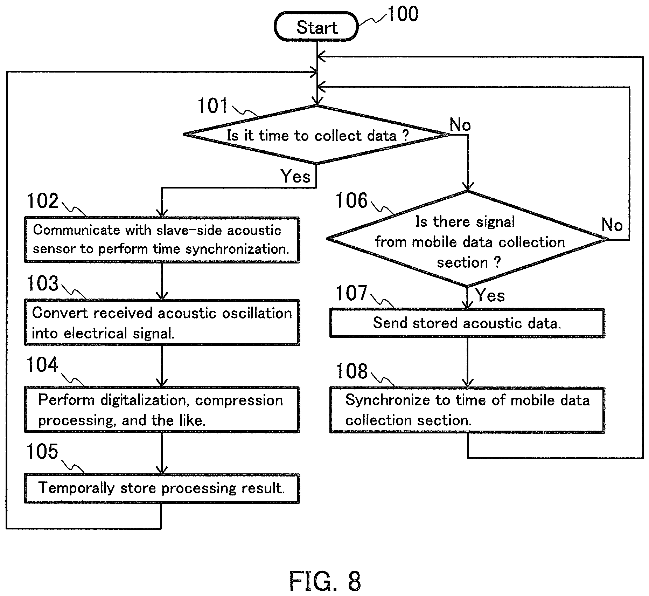

FIGs. 8 to 12 each shows an operation flow of the system of the present embodiment, and each step is described step by step below.

The operation of a master-side acoustic sensor 10 is described below using FIG. 8. The operation starts in a step 100. Then, in a step 101, a time synchronization section 15 refers to an internal clock and check whether or not the time is the time to collect data, such as the quiet of the midnight or the like. When the time is the time to collect data (Yes), in a step 102, a signal is sent to a slave-side acoustic sensor 10 via a ground-side wireless communication section 14 to activate, and the master-side acoustic sensor 10 and the slave-side acoustic sensor 10 are subjected to relative time synchronization. Subsequently, while acoustic oscillation received in a wave receiving element section 11 is converted into an analog electrical signal in a step 103, the signal pre-processing section 12 converts the analog electrical signal into digital data, and the digital data is subjected to compression processing in order to reduce the size of the data in a step 104. Thereafter, in a step 105, the signal temporary storage section 13 stores the processed digital data, and the operation returns to waiting processing in the step 101. At that time, in the step 104, by collecting acoustic data by each combination of an optimal sampling rate and an optimal recording time in accordance with the purpose of the correlation processing and the listening by an investigator, the size of the data are minimized. In the collection of the acoustic data, by collecting the acoustic data received by each acoustic sensor by each of plural sampling rates, a load on a utilizing wireless circuit can be minimized. That is, although the acoustic data are used for the correlation processing and the listening by an investigator in the processing center, the size of the data can be minimized by collecting these data by a sampling rate in accordance with the purpose.

When the time is not the time to collect data (No), a ground-side wireless communication section 14 checks the presence or absence of a data send requested signal from the mobile data collection section 20 in a step 106. When the data send requested signal is received (Yes), acoustic data stored in the signal temporary storage section 13 are sent to the mobile data collection section 20 via the ground-side wireless communication section 14 in a step 107, and the time synchronization section 15 synchronizes absolute time of an internal clock utilizing information on time based on a GPS or the like, sent from the mobile data collection section 20 in a step 108, and thereafter, the operation returns to waiting processing in the step 101. This synchronization of absolute time is performed in order to prevent a deviation in time to acquire data at midnight and may be calibration in the order of about second.

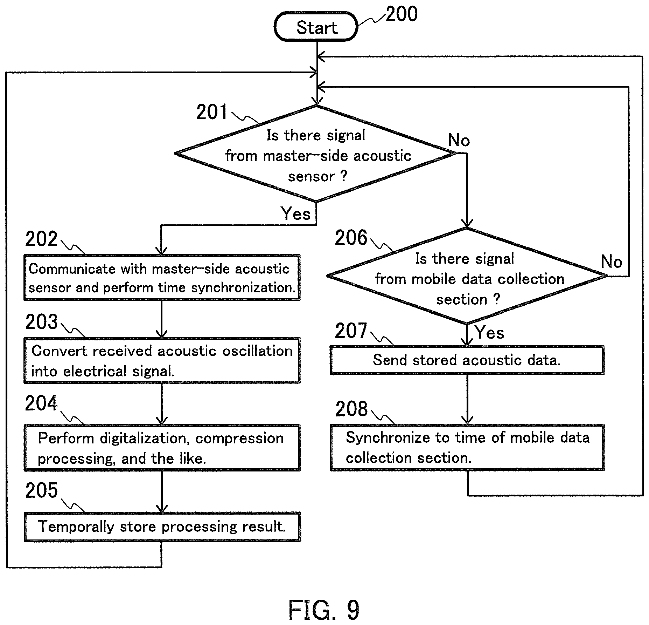

An operation of a slave-side acoustic sensor 10 is described below with reference to FIG. 9. When an operation starts in a step 200, a ground-side wireless communication section 14 checks the presence or absence of a time synchronization requested signal from a master-side acoustic sensor 10 in the step 201. When the time synchronization requested signal is received (Yes), in a step 202, a time synchronization section 15 communicates with the master-side acoustic sensor 10 via the ground-side wireless communication section 14 and performs relative time synchronization between them. A description of the subsequent operation is omitted because the subsequent operation is the same as that of the master-side acoustic sensor 10.

As described above, the relative time synchronization is performed immediately before the acquisition of the acoustic data in this embodiment. This is because it is required to agree the timing of acquiring both of the acoustic data with high accuracy of about micro second in order to accurately perform cross-correlation processing between two acoustic data. In a watch using a general crystal oscillator, an about one second deviation in time is generated per a day. Therefore, even if a calibration of relative time is performed, the high accuracy is maintained for only a short period of time. Thus, it is preferred that the calibration of relative time is performed every time before the measurement.

The mobile data collection section 20 is mounted on a vehicle or the like, patrols each acoustic sensor 10 based on the information in the navigation section 21, acquires acoustic data of each acoustic sensor 10 via the on-vehicle side wireless communication section 22 as described above, stores the acoustic data in the signal collection section 23, and thereafter goes to a location of the processing center section 30.

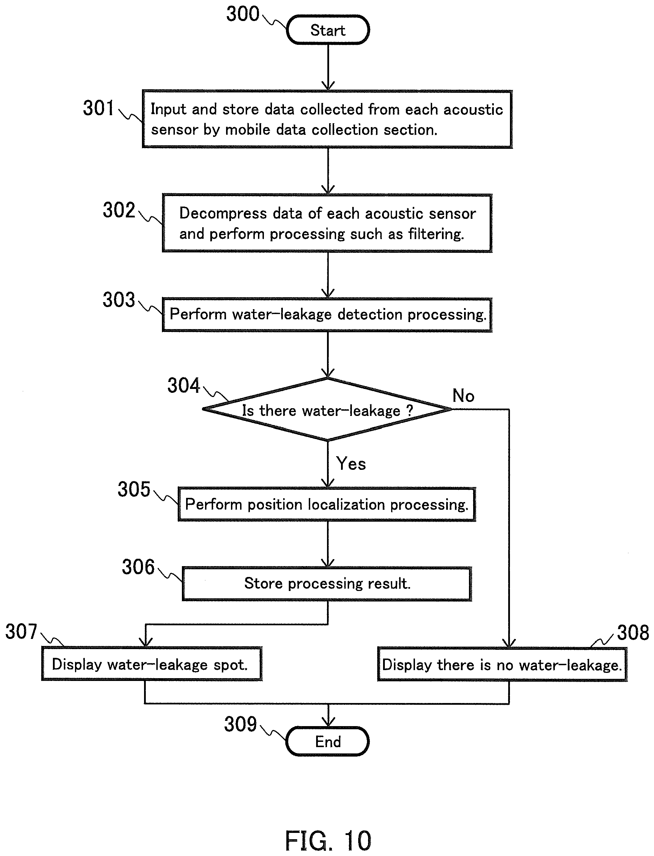

An operation of the processing center section 30 is described using FIG. 10. When the operation starts in a step 300, in a step 301, data of each acoustic sensor 10 is transferred from a signal collection section 23 to a signal post-processing section 31 via a memory card or the like, and the contents of the data are stored in a signal accumulation section 32. Subsequently, in a step 302, a signal post-processing section 31 decompress the compressed acoustic data and remove an unnecessary frequency component by filtering or the like. Thereafter, in a step 303, a water-leakage detection processing section 33 performs water-leakage detection processing. Then, in a step 304, when a water-leakage is detected (Yes), the operation goes to a step 305, and when a water-leakage is not detected (No), the operation goes to a step 308, and a water-leakage spot display section 36 displays that there is no water-leakage, and the processing is ended. On the other hand, in the step 305, a position localization processing section 35 performs localization processing of a water-leakage position utilizing acoustic data with detection of water-leakage sound and information on position of each sensor, stored in a sensor position DB section 34. Subsequently, in a step 306, a result of the position localization is recorded on a signal accumulation section 32, and in a step 307, the position is displayed using the water-leakage spot display section 36, and the processing is ended.

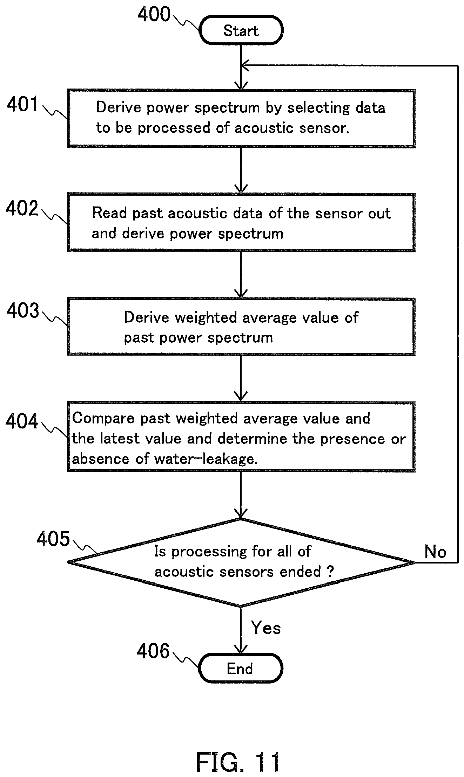

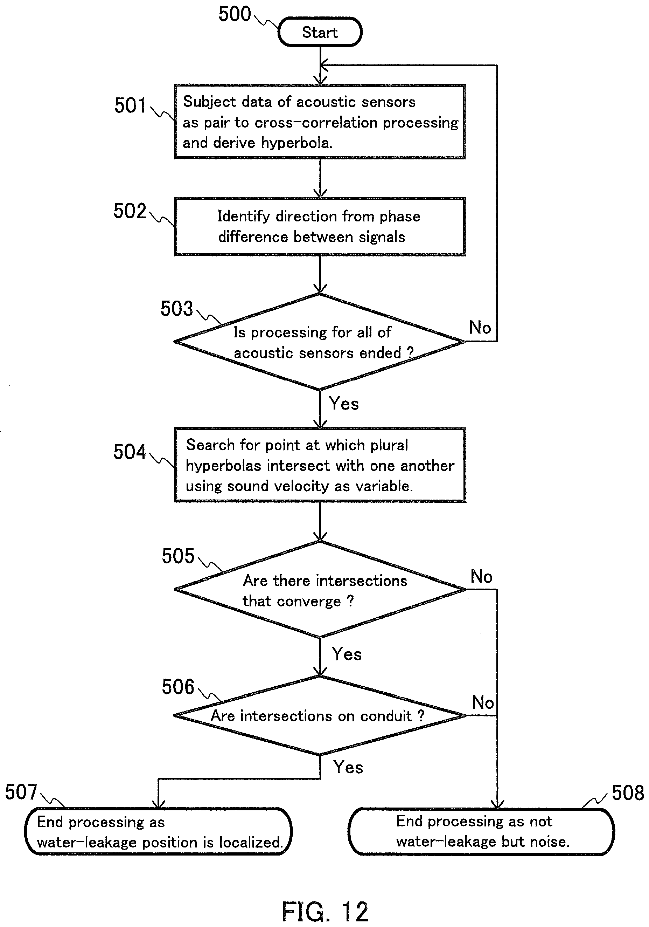

The water-leakage detection processing in the step 303 performed by the water-leakage detection processing section 33 and the position localization processing in the step 305 performed by the position localization processing section 35 in the operation of the processing center section 30 are described in detail using FIGs. 11 and 12.

First, in the water-leakage detection processing of the step 303, after the processing starts (step 400), data to be processed of each acoustic sensor 10 is selected in order, and a power spectrum is derived in a step 401. Subsequently, in a step 402, plural points of past acoustic data of the acoustic sensor, with no detection of water-leakage, are read out from the signal accumulation section 32, and power spectra of them are derived. When the power spectra are derived in the steps 401 and 402, calculation of Fourier transform is performed. At that time, each acoustic data may be subjected to Fourier transform not only one time but plural times, and the results may be integrated or averaged by frequency bin to absorb a fluctuation component in a short time. Subsequently, in a step 403, the derived past power spectra are subjected to time-series weighting, and an average value thereof is derived. The time-series weighting is, for example, a method in which an average is determined by setting a weighting coefficient for the latest data in terms of time to be high and setting a weighting coefficient for the data far away in terms of time to be low. By subjecting the power spectra to the weighting as described above, an average value responding to a change in physical environmental condition in an area surrounding each acoustic sensor 10 can be derived. Subsequently, in a step 404, the past weighted average value and the latest value are compared, and the presence or absence of a water-leakage is determined from the presence or absence of a characteristic difference in spectrum between both of the values and the like. In this determination, for example, in the case where an automatic determination is difficult because energy of a water-leakage sound is unclear, the determination by listening may be performed by an intervention of an investigator who performs the operation in the processing center section 30 as required. Alternatively, the presence or absence of a water-leakage may be determined using other acoustic analysis methods. In a step 405, when determinations of all of acoustic sensors are finished (Yes), the processing is ended (step 406), and when not finished (No), the operation returns to the step 401, and determinations of the other acoustic sensors are continued.

Next, in the position localization processing in the step 305, after the processing starts (step 500), in a step 501, time waveform data of acoustic sensors 10 as a pair are selected, the data are subjected to cross-correlation processing, and a difference between arrival times of water-leakage sounds is determined. Subsequently, a hyperbola with the acoustic sensors 10 as foci is derived from the product of the determined difference between arrival times and the sound velocity under the ground. In fact, it is difficult to accurately assume the sound velocity. Therefore, a hyperbola in the case of the lower limit of the assumed sound velocity and a hyperbola in the case of the upper limit of the assumed sound velocity are determined, and a hyperbola-like region that is present between the hyperbolas is used as an area in which a water-leakage spot can be present. Subsequently, in a step 502, an arrival direction of water-leakage sounds is found from a phase difference between waveforms of the water-leakage sounds subjected to cross-correlation processing in the step 501. Thus, either one of hyperbola-like regions which are drawn symmetrically on the midpoint between the two acoustic sensors 10 is specified. Subsequently, in a step 503, whether or not all of pairs of acoustic sensors 10 detecting water-leakage sounds are subjected to cross-correlation processing is checked, and when finished (Yes), the operation goes to a step 504, and when not finished (No), the operation returns to the step 501 to continue the processing. When plural hyperbola-like areas in which a water-leakage spot can be present are determined as described above, an actual water-leakage spot is, as shown in FIG. 4, present in a part in which all of the plural hyperbola-like regions are overlapped with one another. Therefore, in a step 504, a solution in which areas in which the plural hyperbolas-like regions intersect with one another converge into one is determined using the sound velocity as a variable. Specifically, for example, in the case where three regions intersect with one another as shown in FIG. 4, when a value is determined as a sound velocity, three hyperbola-like regions converge into three hyperbolas, and the three hyperbolas intersect with one another at a total of three intersections. Then, the sound velocity is changed in order at an appropriate step width, between the lower limit of the assumed sound velocity and the upper limit of the assumed sound velocity, the sum of geometric distances among three intersections at each sound velocity is determined, and a solution in which the sum is minimum, i.e., a solution in which the three intersections converge into one may be searched for. The method for determining a convergent solution is not limited to the above-described method, and any of the other methods may be used. As described above, a solution is searched for in the step 504, and in the step 505, when the result of the search shows that there is no convergent point (No), the processing is ended as a false detection such as a noise or the like (step 508). When there is a convergent point (Yes), the operation goes to a step 506, and whether or not the convergent point is present on a conduit is determined on the basis of information in a sensor position DB section 34. When the convergent point is present on a conduit (Yes), the processing is ended as a water-leakage position is localized (step 507), and when the convergent point is not present on a conduit (No), the processing is ended as a false detection caused by a sound source other than a water-leakage (step 508).

As described above, when water leakage sounds can be detected with three pairs of acoustic sensors, even if the sound velocity under the ground is indefinite, the sound velocity can be assumed, and the position can be localized. When there are four or more combinations of acoustic data, multiple solutions can be obtained. Thus, it is expected to further improve accuracy of position localization. Even when there are only two combinations of acoustic data, the position can be localized assuming that a sound source is present on a conduit.

Alternatively, when there are only two combinations of acoustic data, an intensity ratio of water-leakage sounds on both of power spectra is a function of a distance from a water-leakage spot. Thus, a convergent solution can be determined utilizing the function as a convergent condition.

In the present invention, a mechanism of time synchronization between different acoustic sensors can be minimized. This is because a water-leakage position that is outside of an area of acoustic sensors can be localized by placing the acoustic sensors apart from a pipeline, so that a range in which a water-leakage can be searched for can be set in a wide range. In this case, it is only required that two acoustic sensors that are close to each other as a pair are subjected to time synchronization, and it is not necessary to subject all of acoustic sensors to time synchronization. This is because, when each pair is subjected to cross-correlation processing, and hyperbolas with the presence of a sound source are derived, a group of acoustic sensors arranged planarly can be effectively utilized by determining an intersection of these hyperbolas. Setting an interval of two acoustic sensors as a pair to about 100 m is preferable because time synchronization can be performed using a wireless device for data collection. Furthermore, in the case where the interval is about several meters, for example, to close to each other, even if synchronization is performed by wire connection, the construction costs are not significantly increased.

[Fifth embodiment]

The fifth embodiment of the present invention is described in detail below with reference to a figure. In the fourth embodiment, two acoustic sensors 10 as a pair are subjected to time synchronization immediately before the acquisition of acoustic data, and an accurate measurement of a difference between arrival times of water-leakage sounds is performed by cross-correlation processing. Therefore, the characteristics are that, by planarly arranging the pairs, a water-leakage position can be localized from the processing results of a plurality of the pairs even when the sound velocity under the ground is indefinite.

However, for example, in a sparsely populated area that is not a densely populated area, a conduit is not arranged planarly. Therefore, the case where arranging planarly pairs of acoustic sensors 10 is inefficient is assumed. In this case, there is a high possibility that a water-leakage sound cannot be caught with the plurality of the pairs.

As in the third embodiment (FIG. 5), by using and subjecting three acoustic sensors 1, 2, and 3 as a set to time synchronization and cross-correlation processing, a water-leakage position can be localized without another set of acoustic sensors even when the sound velocity under the ground is indefinite.

As shown in FIG. 5, when the acoustic sensors 1, 2, and 3 are placed in line along a conduit 5, by using the center acoustic sensor 1 as a master and the acoustic sensors 2 and 3 at the both sides of the acoustic sensor 1 as slaves and alternatively subjecting the master to time synchronization with the slaves at the both sides of the master, three sensors are eventually subjected to time synchronization. Therefore, in the cross-correlation processing for determining a difference between arrival times of water-leakage sounds, three combinations including a combination of acoustic sensors 1 and 2, a combination of acoustic sensors 1 and 3, and a combination of acoustic sensors 2 and 3 can be selected. Thus, as shown in FIG. 5, three hyperbolas with the respective combinations of acoustic sensors as foci can be drawn. By determining a spot at which three intersections formed by the three hyperbolas converge using the sound velocity as a variable, the spot becomes a water-leakage spot.

The configuration of the fifth embodiment is the same as that of the fourth embodiment except that three acoustic sensors are used as a set as substitute for two acoustic sensors as a pair. The operation of the fifth embodiment is different from that of the fourth embodiment in a flow of a master-side acoustic sensor 1 and a flow in a position localization processing section 35.

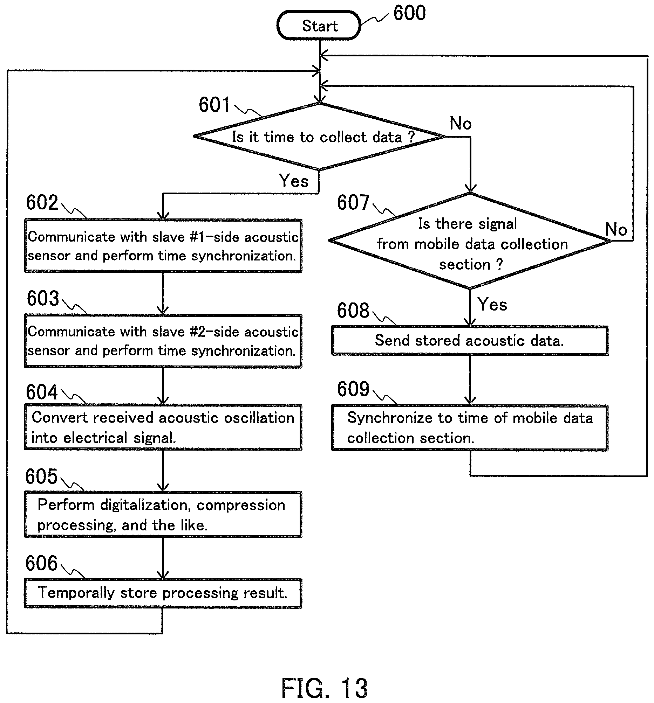

First, an operation of a master-side acoustic sensor 1 is described using FIG. 13. An operation starts in a step 600. Then, in a step 601, a time synchronization section 15 refers to an internal clock and check whether or not the time is the time to collect data, such as the quiet of the midnight or the like. When the time is the time to collect data (Yes), in a step 602, a signal is sent to a first slave- (slave #1) side acoustic sensor via a ground-side wireless communication section 14 to activate, and a master-side acoustic sensor and the first slave-side acoustic sensor are subjected to relative time synchronization. Subsequently, in a step 603, in the same manner as described above, a signal is sent to a second slave- (slave #2) side acoustic sensor to activate, and the master-side acoustic sensor and the second slave-side acoustic sensor are subjected to relative time synchronization. The time synchronization of the three acoustic sensors is finished as described above. The descriptions of a subsequent operation and an operation of each slave-side acoustic sensor are omitted because the operations are the same as those in the fourth embodiment.

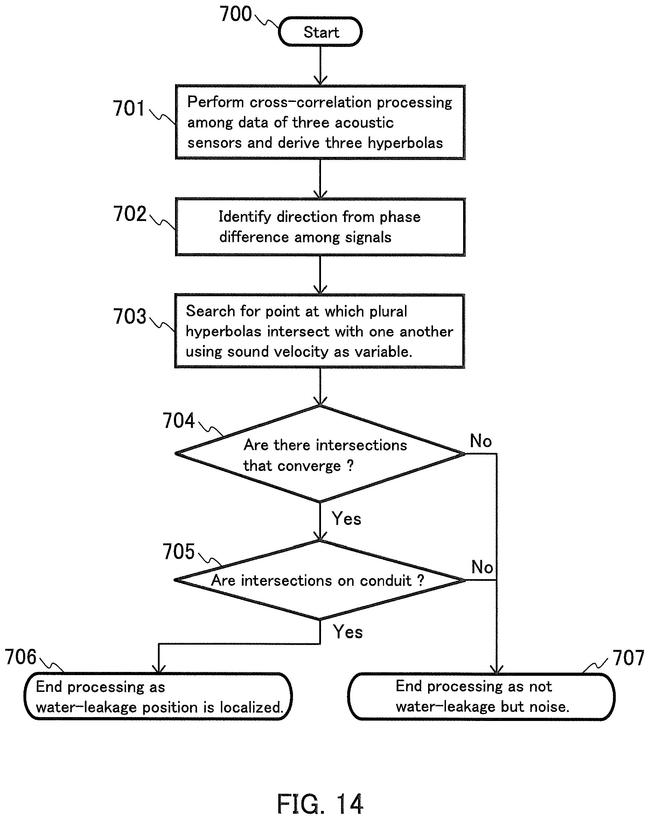

Subsequently, an operation of a position localization processing section 35 is described using FIG. 14. After the processing starts (step 700), in a step 701, time waveform data of three combinations of the acoustic sensors as sets are selected, the three combinations of the data are subjected to cross-correlation processing, and each difference between arrival times of water-leakage sounds is determined. Subsequently, three hyperbola-like regions with the respective three combinations of the acoustic sensors as foci are derived from the products of the respective determined three differences between arrival times and the lower limit and the upper limit of the assumed sound velocity under the ground. Thereafter, in a step 702, an arrival direction of water-leakage sounds is found from phase differences between three waveforms of the water-leakage sounds subjected to cross-correlation processing in the step 701. Thus, either one of the hyperbola-like regions which are drawn symmetrically on the midpoint between the each combination of the acoustic sensor is specified. Subsequently, in a step 703, a solution in which areas in which the three hyperbola-like regions intersect with one another converge into one is determined using the sound velocity as a variable. The description of a subsequent operation is omitted because the operation is the same as that in the fourth embodiment.

As described above, a water leakage position can be localized without planarly arranging acoustic sensors using and subjecting three acoustic sensors as a set to time synchronization and cross-correlation processing even when the sound velocity under the ground is indefinite.

Industrial Applicability

According to the present invention, a leakage detection method, a water-leakage detection method, a leakage detection device, and a water-leakage detection device, for a pipe, with an ease of placing sensors, high accuracy of detection, and high reliability can be provided. By application of the present invention, detection of water-leakage can be efficiently performed in a wide range of location. Thus, efficiency of searching for water-leakage is dramatically improved, and a problem of securing investigators with skilled technique is solved. In the embodiments, a water-leakage from a conduit is specifically described. The object to which the present invention is applied, however, is not limited to the conduit and can be leakages of various fluid from a gas pipe and a plant pipe.

Explanation of reference numerals

| | |
|---|---|
| 1, 2, 3, 10 | acoustic sensor |
| 5 | pipe (conduit) |
| 6, 7, 8 | hyperbola |
| X | water-leakage position |
| 11 | wave receiving element section |
| 12 | signal pre-processing section |
| 13 | signal temporary storage section |
| 14 | ground-side wireless communication section |
| 15 | time synchronization section |
| 20 | mobile data collection section |
| 21 | navigation section |
| 22 | on-vehicle side wireless communication section |
| 23 | signal collection section |
| 30 | processing center section |
| 31 | signal post-processing section |
| 32 | signal accumulation section |
| 33 | water-leakage detection processing section |
| 34 | sensor position DB section |
| 35 | position localization processing section |
| 36 | water-leakage spot display section |

**Claims**

1. A leakage detection method for detecting a leakage from a pipe (5) in which a fluid flows, using a pair of acoustic sensors (1, 2, 3, 10) arranged at a certain distance from each other and a certain distance from a location of the pipe (5), the method comprising:

    an acoustic data acquisition step of performing time synchronization between the pair of acoustic sensors (1, 2, 3, 10) and acquiring acoustic data by the pair of acoustic sensors (1, 2, 3, 10);
    a time difference calculation step of determining a difference between arrival times of sounds received by the respective acoustic sensors (1, 2, 3, 10);
    a distance difference calculation step of calculating, from the difference between arrival times, a difference between distances from a source of the sounds to the respective acoustic sensors (1, 2, 3, 10);

a hyperbola (6, 7, 8) acquisition step of determining a hyperbola (6, 7, 8) having positions of the respective acoustic sensors (1, 2, 3, 10) as foci with a difference in distance from each of the acoustic sensors (1, 2, 3, 10) being constant; and

a position identification step of identifying a position (x) of the leakage from an intersection between the pipe (5) and the hyperbola (6, 7, 8).

2. The leakage detection method according to claim 1, wherein

a plurality of the pairs of acoustic sensors (1, 2, 3, 10) are used,

in the hyperbola acquisition step, hyperbolas (6, 7, 8) for the respective pairs are determined, and

in the position identification step, intersections of the hyperbolas (6, 7, 8) determined for the respective pairs are subjected to weighted averaging to identify a position of the source of the sounds.

3. The leakage detection method according to claim 1 or 2, wherein

at least three acoustic sensors (1, 2, 3, 10) are used as a set as substitute for the two acoustic sensors (1, 2, 3, 10), and

in the hyperbola acquisition step, at least three kinds of hyperbolas (6, 7, 8) are determined using, as foci, combinations of two acoustic sensors (1, 2, 3, 10) among the at least three acoustic sensors (1, 2, 3, 10).

4. The leakage detection method according to any one of claims 1 to 3, wherein

at least three pairs of acoustic sensors (1, 2, 3, 10) are used, and

in the position identification step, the intersections are determined using, as a variable parameter, a sound velocity in a medium in which the sound propagates.

5. The leakage detection method according to any one of claims 1 to 4, prior to the time difference calculation step, comprising:

a determination step of deriving a power spectrum of acoustic data received by the acoustic sensor (1, 2, 3, 10) and comparing the power spectrum with a power spectrum of past acoustic data with no detection of leakage, to determine the presence or absence of a leakage.

6. The leakage detection method according to claim 5, wherein

when plural intersections of the hyperbolas (6, 7, 8) are present, in the position identification step, a position of the leakage is identified using intensity ratio data of leakage sounds on the power spectrum of the acoustic data received by the acoustic sensors (1, 2, 3, 10).

7. A leakage detection device for detecting a leakage from a pipe (5) in which a fluid flows, the leakage detection device comprising:

an acoustic data acquisition unit that is a pair of acoustic sensors (1, 2, 3, 10) capable of acquiring acoustic data and being subjected to time synchronization, arranged at a certain distance from each other and a certain distance from a location of the pipe (5);

a time difference calculation unit configured to determine a difference between arrival times of sounds received by the respective acoustic sensors (1, 2, 3, 10);

a distance difference calculation unit configured to calculate, from the difference between arrival times, a difference between distances from a source of the sounds to the respective acoustic sensors (1, 2, 3, 10);

a hyperbola acquisition unit configured to determine a hyperbola (6, 7, 8) having positions of the respective acoustic sensors (1, 2, 3, 10) as foci with a difference in distance from each of the acoustic sensors (1, 2, 3, 10) is constant; and

a position identification unit configured to identify a position (x) of the leakage from an intersection between the pipe (5) and the hyperbola (6, 7, 8).

8. The leakage detection device according to claim 7, wherein

a plurality of the pairs of acoustic sensors (1, 2, 3, 10) are used,

the hyperbola acquisition unit is configured to determine hyperbolas (6, 7, 8) for the respective pairs, and

the position identification unit is configured to subject intersections of the hyperbolas (6, 7, 8) determined for the respective pairs to weighted averaging to identify a position of the source of the sounds.

9. The leakage detection device according to claim 7 or 8, wherein

at least three acoustic sensors (1, 2, 3, 10) are used as a set as substitute for the two acoustic sensors (1, 2, 3, 10), and the hyperbola acquisition unit is configured to determine at least three kinds of hyperbolas (6, 7, 8) using, as foci, combinations of two acoustic sensors (1, 2, 3, 10) among the at least three acoustic sensors (1, 2, 3, 10).

10. The leakage detection device according to any one of claims 7 to 9, wherein
at least three pairs of acoustic sensors (1, 2, 3, 10) are used, and
the position identification unit is configured to determine the intersections using, as a variable parameter, a sound velocity in a medium in which the sound propagates.

11. The leakage detection device according to any one of claims 7 to 10, further comprising:

a determination unit configured to derive and to compare a power spectrum of acoustic data received by the acoustic sensors (1, 2, 3, 10) with a power spectrum of past acoustic data with no detection of leakage to determine the presence or absence of a leakage.

12. The leakage detection device according to claim 11, wherein
when plural intersections of the hyperbolas (6, 7, 8) are present, the position identification unit identifies a position of the leakage using intensity ratio data of leakage sounds on the power spectrum of the acoustic data received by the acoustic sensors (1, 2, 3, 10).

**Patentansprüche**

1. Leckortungsverfahren zum Orten eines Lecks in einem Rohr (5), in dem ein Fluid fließt, unter Verwendung eines Paars akustischer Sensoren (1, 2, 3, 10), die in einem bestimmten Abstand voneinander und in einem bestimmten Abstand von einem Ort des Rohrs (5) angeordnet sind, wobei das Verfahren aufweist:

einen Schritt zur Erfassung akustischer Daten zum Durchführen einer Zeitsynchronisation zwischen dem Paar akustischer Sensoren (1, 2, 3, 10) und zum Erfassen von akustischen Daten durch das Paar akustischer Sensoren (1, 2, 3, 10);
ein Zeitdifferenz-Berechnungsschritt zum Bestimmen einer Differenz zwischen Ankunftszeiten von Tönen, die durch die jeweiligen akustischen Sensoren (1, 2, 3, 10) empfangen werden;
ein Abstandsdifferenz-Berechnungsschritt zum Berechnen aus der Differenz zwischen Ankunftszeiten einer Differenz zwischen Abständen von einer Quelle der Töne zu den jeweiligen akustischen Sensoren (1, 2, 3, 10);
einen Schritt zur Erfassung einer Hyperbel (6, 7, 8) zum Bestimmen einer Hyperbel (6, 7, 8), die die Positionen der jeweiligen akustischen Sensoren (1, 2, 3, 10) als Brennpunkte aufweist, wobei eine Abstandsdifferenz von jedem der akustischen Sensoren (1, 2, 3, 10) konstant ist; und
ein Positionsermittlungsschritt zum Ermitteln einer Position (x) des Lecks aus einem Schnittpunkt zwischen dem Rohr (5) und der Hyperbel (6, 7, 8).

2. Leckortungsverfahren nach Anspruch 1, wobei
eine Vielzahl der Paare akustischer Sensoren (1, 2, 3, 10) verwendet wird,
im Hyperbelerfassungsschritt Hyperbeln (6, 7, 8) für die jeweiligen Paare bestimmt werden, und
im Positionsermittlungsschritt Schnittpunkte der für die jeweiligen Paare bestimmten Hyperbeln (6, 7, 8) einer gewichteten Mittelwertbildung unterzogen werden, um eine Position der Quelle der Töne zu ermitteln.

3. Leckortungsverfahren nach Anspruch 1 oder 2, wobei
mindestens drei akustische Sensoren (1, 2, 3, 10) als ein Satz als Ersatz für die beiden akustischen Sensoren (1, 2, 3, 10) verwendet werden, und
im Hyperbelerfassungsschritt mindestens drei Arten von Hyperbeln (6, 7, 8) bestimmt werden, wobei als Brennpunkte Kombinationen von zwei akustischen Sensoren (1, 2, 3, 10) aus den mindestens drei akustischen Sensoren (1, 2, 3, 10) verwendet werden.

4. Leckortungsverfahren nach einem der Ansprüche 1 bis 3, wobei
mindestens drei Paare akustischer Sensoren (1, 2, 3, 10) verwendet werden, und
im Positionsermittlungsschritt die Schnittpunkte unter Verwendung einer Schallgeschwindigkeit in einem Medium als einen variablen Parameter bestimmt werden, in dem sich der Schall ausbreitet.

5. Leckortungsverfahren nach einem der Ansprüche 1 bis 4, das vor dem Zeitdifferenz-Berechnungsschritt aufweist:

   einen Bestimmungsschritt zum Ableiten eines Leistungsspektrums von akustischen Daten, die durch den akustischen Sensor (1, 2, 3, 10) empfangen werden, und zum Vergleichen des Leistungsspektrums mit einem Leistungsspektrum von vergangenen akustischen Daten ohne eine Erkennung eines Lecks, um das Vorhandensein oder Fehlen eines Lecks zu bestimmen.

6. Leckortungsverfahren nach Anspruch 5, wobei wenn mehrere Schnittpunkte der Hyperbeln (6, 7, 8) vorhanden sind, im Positionsermittlungsschritt eine Position des Lecks unter Verwendung von Intensitätsverhältnisdaten von Lecktönen auf dem Leistungsspektrum der akustischen Daten ermittelt wird, die durch die akustischen Sensoren (1, 2, 3, 10) empfangen werden.

7. Leckortungsvorrichtung zum Orten eines Lecks in einem Rohr (5), in dem ein Fluid fließt, wobei die Leckortungsvorrichtung aufweist:

   eine Einheit zur Erfassung akustischer Daten, die aus einem Paar akustischer Sensoren (1, 2, 3, 10) besteht, die zum Erfassen akustischer Daten imstande sind und einer Zeitsynchronisation unterzogen werden, die in einem bestimmten Abstand voneinander und in einem bestimmten Abstand von einem Ort des Rohrs (5) angeordnet sind;
   eine Zeitdifferenz-Berechnungseinheit, die konfiguriert ist, eine Differenz zwischen Ankunftszeiten von Tönen zu bestimmen, die durch die jeweiligen akustischen Sensoren (1, 2, 3, 10) empfangen werden;
   eine Abstandsdifferenz-Berechnungseinheit, die konfiguriert ist, aus der Differenz zwischen Ankunftszeiten eine Differenz zwischen Abständen von einer Quelle der Töne zu den jeweiligen akustischen Sensoren (1, 2, 3, 10) zu berechnen;
   eine Hyperbelerfassungseinheit, die konfiguriert ist, eine Hyperbel (6, 7, 8) zu bestimmen, die die Positionen der jeweiligen akustischen Sensoren (1, 2, 3, 10) als Brennpunkte aufweist, wobei eine Abstandsdifferenz von jedem der akustischen Sensoren (1, 2, 3, 10) konstant ist; und
   eine Positionsermittlungseinheit, die konfiguriert ist, eine Position (x) des Lecks aus einem Schnittpunkt zwischen dem Rohr (5) und der Hyperbel (6, 7, 8) zu ermitteln.

8. Leckortungsvorrichtung nach Anspruch 7, wobei eine Vielzahl der Paare der akustischer Sensoren (1, 2, 3, 10) verwendet wird,
   die Hyperbelerfassungseinheit konfiguriert ist, Hyperbeln (6, 7, 8) für die jeweiligen Paare zu bestimmen, und
   die Positionsermittlungseinheit konfiguriert ist, Schnittpunkte der für die jeweiligen Paare bestimmten Hyperbeln (6, 7, 8) einer gewichteten Mittelwertbildung zu unterziehen, um eine Position der Quelle der Töne zu ermitteln.

9. Leckortungsvorrichtung nach Anspruch 7 oder 8, wobei
   mindestens drei akustische Sensoren (1, 2, 3, 10) als ein Satz als Ersatz für die beiden akustischen Sensoren (1, 2, 3, 10) verwendet werden, und
   die Hyperbelerfassungseinheit konfiguriert ist, mindestens drei Arten von Hyperbeln (6, 7, 8) zu bestimmen, wobei als Brennpunkte Kombinationen von zwei akustischen Sensoren (1, 2, 3, 10) aus den mindestens drei akustischen Sensoren (1, 2, 3, 10) verwendet werden.

10. Leckortungsvorrichtung nach einem der Ansprüche 7 bis 9, wobei
    mindestens drei Paare akustischer Sensoren (1, 2, 3, 10) verwendet werden, und
    die Positionsermittlungseinheit konfiguriert ist, die Schnittpunkte unter Verwendung einer Schallgeschwindigkeit als einen variablen Parameter in einem Medium zu bestimmen, in dem sich der Schall ausbreitet.

11. Leckortungsvorrichtung nach einem der Ansprüche 7 bis 10, die ferner aufweist:

    eine Bestimmungseinheit, die konfiguriert ist, ein Leistungsspektrum von akustischen Daten abzuleiten, die durch die akustischen Sensoren (1, 2, 3, 10) empfangen werden, und es mit einem Leistungsspektrum von vergangenen akustischen Daten ohne eine Erkennung eines Lecks zu vergleichen, um das Vorhandensein oder Fehlen eines Lecks zu bestimmen.

12. Leckortungsvorrichtung nach Anspruch 11, wobei wenn mehrere Schnittpunkte der Hyperbeln (6, 7, 8) vorhanden sind, die Positionsermittlungseinheit eine Position des Lecks unter Verwendung von Intensitätsverhältnisdaten von Lecktönen auf dem Leistungsspektrum der akustischen Daten ermittelt, die durch die akustischen Sensoren (1, 2, 3, 10) empfangen werden.

**Revendications**

1. Procédé de détection de fuite permettant de détecter une fuite sur une conduite (5) où circule un fluide au moyen d'une paire de capteurs acoustiques (1, 2, 3, 10) disposés à une certaine distance l'un de l'autre et à une certaine distance d'un emplacement de la conduite (5), ledit procédé comprenant :

   une étape d'acquisition de données acoustiques où sont exécutées une synchronisation temporelle entre la paire de capteurs acoustiques (1, 2, 3, 10) et une acquisition de données acoustiques par la paire de capteurs acoustiques (1, 2, 3, 10) ;
   une étape de calcul de différence temporelle où est déterminée une différence entre des temps d'arrivée de sons reçus par les capteurs acoustiques (1, 2, 3, 10) respectifs ;
   une étape de calcul de différence de distances où est calculée, à partir de la différence entre temps d'arrivée, une différence entre distances d'une source des sons aux capteurs acoustiques (1, 2, 3, 10) respectifs ;
   une étape d'acquisition d'hyperbole (6, 7, 8) où est déterminée une hyperbole (6, 7, 8) dont les foyers sont les positions des capteurs acoustiques (1, 2, 3, 10) respectifs, une différence de distance depuis chacun des capteurs acoustiques (1, 2, 3, 10) étant constante ; et
   une étape d'identification de position identification où est identifiée une position (x) de la fuite à partir d'une intersection de la conduite (5) et de l'hyperbole (6, 7, 8).

2. Procédé de détection de fuite selon la revendication 1, où
   une pluralité de paires de capteurs acoustiques (1, 2, 3, 10) est utilisée,
   lors de l'étape d'acquisition d'hyperbole, des hyperboles (6, 7, 8) sont déterminées pour les paires respectives, et où,
   lors de l'étape d'identification de position, les intersections des hyperboles (6, 7, 8) déterminées pour les paires respectives sont soumises à un calcul de moyenne pondérée pour identifier une position de la source des sons.

3. Procédé de détection de fuite selon la revendication 1 ou la revendication 2, où
   au moins trois capteurs acoustiques (1, 2, 3, 10) sont utilisés comme ensemble au lieu des deux capteurs acoustiques (1, 2, 3, 10), et où,
   lors de l'étape d'acquisition d'hyperbole, au moins trois sortes d'hyperboles (6, 7, 8) sont déterminées au moyen de combinaisons de deux capteurs acoustiques (1, 2, 3, 10) parmi les au moins trois capteurs acoustiques (1, 2, 3, 10), en tant que foyers.

4. Procédé de détection de fuite selon l'une des revendications 1 à 3, où
   au moins trois paires de capteurs acoustiques (1, 2, 3, 10) sont utilisées, et où,
   lors de l'étape d'identification de position, les intersections sont déterminées au moyen d'une vitesse de son dans un milieu de propagation du son, en tant que paramètre variable.

5. Procédé de détection de fuite selon l'une des revendications 1 à 4, préalablement à l'étape de calcul de différence temporelle, comprenant :

   une étape de détermination où est déduit un spectre de puissance de données acoustiques reçues par le capteur acoustique (1, 2, 3, 10) et où le spectre de puissance est comparé à un spectre de puissance de données acoustiques antérieures exemptes de détection de fuite, afin de déterminer la présence ou l'absence d'une fuite.

6. Procédé de détection de fuite selon la revendication 5, où,
   si plusieurs intersections des hyperboles (6, 7, 8) sont présentées lors de l'étape d'identification de position, une position de la fuite est identifiée au moyen de données de rapport d'intensité de sons de fuite sur le spectre de puissance des données acoustiques reçues par les capteurs acoustiques (1, 2, 3, 10).

7. Dispositif de détection de fuite permettant de détecter une fuite sur une conduite (5) où circule un fluide, ledit dispositif de détection de fuite comprenant :

   une unité d'acquisition de données acoustiques constituée d'une paire de capteurs acoustiques (1, 2, 3, 10) capables d'acquérir des données acoustiques et soumis à une synchronisation temporelle, disposés à une certaine distance l'un de l'autre et à une certaine distance d'un emplacement de la conduite (5) ;

une unité de calcul de différence temporelle prévue pour déterminer une différence entre temps d'arrivée de sons reçus par les capteurs acoustiques (1, 2, 3, 10) respectifs ;

une unité de calcul de différence de distance prévue pour calculer, à partir de la différence entre temps d'arrivée, une différence entre distances d'une source des sons aux capteurs acoustiques (1, 2, 3, 10) respectifs ;

une unité d'acquisition d'hyperbole prévue pour déterminer une hyperbole (6, 7, 8) dont les foyers sont les positions des capteurs acoustiques (1, 2, 3, 10) respectifs, une différence de distance depuis chacun des capteurs acoustiques (1, 2, 3, 10) étant constante ; et

une unité d'identification de position prévue pour identifier une position (x) de la fuite à partir d'une intersection de la conduite (5) et de l'hyperbole (6, 7, 8).

8. Dispositif de détection de fuite selon la revendication 7, où
une pluralité de paires de capteurs acoustiques (1, 2, 3, 10) est utilisée,
l'unité d'acquisition d'hyperbole est prévue pour déterminer des hyperboles (6, 7, 8) pour les paires respectives, et où
l'unité d'identification de position est prévue pour soumettre les intersections des hyperboles (6, 7, 8) déterminées pour les paires respectives à un calcul de moyenne pondérée pour identifier une position de la source des sons.

9. Dispositif de détection de fuite selon la revendication 7 ou la revendication 8, où
au moins trois capteurs acoustiques (1, 2, 3, 10) sont utilisés comme ensemble au lieu des deux capteurs acoustiques (1, 2, 3, 10), et où
l'unité d'acquisition d'hyperbole est prévue pour déterminer au moins trois sortes d'hyperboles (6, 7, 8) au moyen de combinaisons de deux capteurs acoustiques (1, 2, 3, 10) parmi les au moins trois capteurs acoustiques (1, 2, 3, 10), en tant que foyers.

10. Dispositif de détection de fuite selon l'une des revendications 7 à 9, où
au moins trois paires de capteurs acoustiques (1, 2, 3, 10) sont utilisées, et où
l'unité d'identification de position est prévue pour déterminer les intersections au moyen d'une vitesse de son dans un milieu de propagation du son, en tant que paramètre variable.

11. Dispositif de détection de fuite selon l'une des revendications 7 à 10, comprenant en outre :

une unité de détermination prévue pour déduire un spectre de puissance de données acoustiques reçues par les capteurs acoustiques (1, 2, 3, 10) et comparer celui-ci avec un spectre de puissance de données acoustiques antérieures exemptes de détection de fuite, afin de déterminer la présence ou l'absence d'une fuite.

12. Dispositif de détection de fuite selon la revendication 11, où,
si plusieurs intersections des hyperboles (6, 7, 8) sont présentées, l'unité d'identification de position identifie une position de la fuite au moyen de données de rapport d'intensité de sons de fuite sur le spectre de puissance des données acoustiques reçues par les capteurs acoustiques (1, 2, 3, 10).

FIG. 1

Conduit

Sound source of water-leakage

Wave receiver pair

Conduit

Wave receiver pair

Conduit

Wave receiver pair

FIG. 2

Conduit

Wave receiver pair

Conduit

Wave receiver pair

Sound source other than water-leakage

Conduit

Wave receiver pair

FIG. 3

Range in which sound source can be present

Error span by sound velocity

FIG. 4

FIG. 5

FIG. 6

**Processing center section** (30)

- 36 — Water-leakage spot display section
- 35 — Position localization processing section
- 34 — Sensor position DB section
- 33 — Water-leakage detection processing section
- 31 — Signal post-processing section
- 32 — Signal accumulation section

Memory card etc.

**Acoustic sensor** (10)

- 11 — Wave receiving element section
- 12 — Signal pre-processing section
- 13 — Signal temporary storage section
- 14 — Ground-side wireless communication section
- 15 — Time synchronization section

Wireless communication

**Mobile data collection section** (20)

- 23 — Signal collection section
- 22 — On-vehicle side wireless communication
- 21 — Navigation section

FIG. 7

```
        ┌─────────────┐
        │    Start    │ ⌇ 100
        └──────┬──────┘
               │
       101 ⌇   ▼
        ◇ Is it time to collect data ? ◇──No──┐
               │ Yes                           │
               ▼                        106 ⌇  ▼
  102 ⌇                                  ◇ Is there signal          ┐
  ┌────────────────────────────┐          from mobile data ────No──┤
  │ Communicate with slave-side │         collection section ? ◇    │
  │ acoustic sensor to perform  │              │ Yes               │
  │ time synchronization.       │       107 ⌇  ▼                   │
  └────────────┬───────────────┘       ┌──────────────────────┐    │
  103 ⌇        ▼                        │ Send stored acoustic │    │
  ┌────────────────────────────┐        │ data.                │    │
  │ Convert received acoustic   │       └──────────┬───────────┘    │
  │ oscillation into electrical │       108 ⌇      ▼                │
  │ signal.                     │       ┌──────────────────────┐    │
  └────────────┬───────────────┘        │ Synchronize to time  │    │
  104 ⌇        ▼                         │ of mobile data       │    │
  ┌────────────────────────────┐        │ collection section.  │    │
  │ Perform digitalization,     │       └──────────────────────┘    │
  │ compression processing, and │                                   │
  │ the like.                   │                                   │
  └────────────┬───────────────┘                                   │
  105 ⌇        ▼                                                    │
  ┌────────────────────────────┐                                   │
  │ Temporally store processing │                                   │
  │ result.                     │                                   │
  └────────────────────────────┘                                   │
```

FIG. 8

200

Start

201

Is there signal
from master-side acoustic
sensor ?

No

Yes

202

Communicate with master-side acoustic
sensor and perform time synchronization.

203

Convert received acoustic oscillation
into electrical signal.

204

Perform digitalization, compression
processing, and the like.

205

Temporally store processing result.

206

Is there signal
from mobile data collection
section ?

No

Yes

207

Send stored acoustic data.

208

Synchronize to time of mobile data
collection section.

FIG. 9

300 — ( Start )

301 — Input and store data collected from each acoustic sensor by mobile data collection section.

302 — Decompress data of each acoustic sensor and perform processing such as filtering.

303 — Perform water-leakage detection processing.

304 — Is there water-leakage ? — No

Yes

305 — Perform position localization processing.

306 — Store processing result.

307 — Display water-leakage spot.

308 — Display there is no water-leakage.

309 — ( End )

FIG. 10

400 — ( Start )

401 — Derive power spectrum by selecting data
to be processed of acoustic sensor.

402 — Read past acoustic data of the sensor out
and derive power spectrum

403 — Derive weighted average value of
past power spectrum

404 — Compare past weighted average value and
the latest value and determine the presence or
absence of water-leakage.

405 — Is processing for all of
acoustic sensors ended ?          No

Yes

406 — ( End )

FIG. 11

500 — Start

501 — Subject data of acoustic sensors as pair to cross-correlation processing and derive hyperbola.

502 — Identify direction from phase difference between signals

503 — Is processing for all of acoustic sensors ended ?    No

Yes

504 — Search for point at which plural hyperbolas intersect with one another using sound velocity as variable.

505 — Are there intersections that converge ?    No

Yes

506 — Are intersections on conduit ?    No

Yes

507 — End processing as water-leakage position is localized.

508 — End processing as not water-leakage but noise.

FIG. 12

600

Start

601

Is it time to collect data ?

No

Yes

602

Communicate with slave #1-side acoustic sensor and perform time synchronization.

603

Communicate with slave #2-side acoustic sensor and perform time synchronization.

604

Convert received acoustic oscillation into electrical signal.

605

Perform digitalization, compression processing, and the like.

606

Temporally store processing result.

607

Is there signal from mobile data collection section ?

No

Yes

608

Send stored acoustic data.

609

Synchronize to time of mobile data collection section.

FIG. 13

28

700 — ( Start )

701 — Perform cross-correlation processing among data of three acoustic sensors and derive three hyperbolas

702 — Identify direction from phase difference among signals

703 — Search for point at which plural hyperbolas intersect with one another using sound velocity as variable.

704 — Are there intersections that converge ? — No

Yes

705 — Are intersections on conduit ? — No

Yes

706 — ( End processing as water-leakage position is localized. )

707 — ( End processing as not water-leakage but noise. )

FIG. 14

**EP 2 833 113 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008051776 A
- JP H1172409 A
- JP H11248591 A
- JP H11117356 A
- US 7739899 B1
- EP 0697586 A2
- WO 2004090498 A1
- EP 2352002 A1